# EUROPEAN PATENT SPECIFICATION

(11) **EP 3 791 009 B1**
(45) Date of publication and mention of the grant of the patent: **04.10.2023**
(21) Application number: 19723195.4
(22) Date of filing: 07.05.2019
(51) Int. Cl.: C25B 1/04, C25B 11/04, C25B 9/17

(54) **ELECTROCHEMICAL PRODUCTION OF HYDROGEN FROM SEA WATER**
ELEKTROCHEMISCHE HERSTELLUNG VON WASSERSTOFF AUS MEERWASSER
PRODUCTION ÉLECTROCHIMIQUE D'HYDROGÈNE À PARTIR D'EAU DE MER

(30) Priority: 08.05.2018 GB 201807469; 17.01.2019 GB 201900680
(43) Date of publication of application: 17.03.2021
(73) Proprietor: Torvex Energy Limited, Fishburn Durham TS21 4HD (GB)
(72) Inventor: HUDSON, Stewart, Durham SR8 5EQ (GB)
(74) Representative: Definition IP Limited
(86) International application number: PCT/GB2019/051246
(87) International publication number: WO 2019/215432

(56) References cited:
- US-A1- 2004 229 090
- US-A1- 2009 242 424
- US-A1- 2009 321 251
- US-A1- 2010 084 272
- US-B2- 8 282 812

## Description

### Technical Field

The present invention relates to an apparatus and method for the electrochemical production of hydrogen gas from salt water.

### Background

Water is an abundant natural resource, covering about 71% of the earth's surface. It is estimated that approximately 96.5% of this water is contained within the oceans as salt water. It would clearly be advantageous therefore to utilize salt water resources for the production of hydrogen.

Alkaline water electrolysis is presently the most commonly used technique for large-scale electrolytic hydrogen production. However, this technique typically utilises fresh water with a low salt content, rather than salt water. If salt water is used, at least partial desalination of the water is required before hydrogen gas can be produced by electrolysis. This leads to the additional capital costs associated with water treatment and desalination, as well as the need to dispose of the residual salts generated during the desalination. In addition, while significant improvements to the technology have been made in recent years, efficiency of these systems is typically maximised at around 70%.

A number of other inefficiencies are also associated with known processes for the production of hydrogen gas from salt water. In particular, standard electrolysis in unbuffered solutions causes salt water to generate oxygen (below ~2.25 V). Above ~2.26 V, however, chlorine is generated. Any chlorine generated at the anode undergoes immediate hydrolysis which also generates H⁺. As the anode becomes more acidic, chloride preferentially undergoes oxidation at the anode to form chlorine gas, Clz, a corrosive substance. Cl₂ also reacts with water to form hypochlorous acid (HOCI).

In this process, the increasing acidity of the solution corrodes the electrode materials, requiring them to be replaced, and renders the solution toxic, necessitating the disposal of hazardous chemicals. All of these problems increase both capital and running costs and make scale-up difficult.

US2009/242424 A1 discloses a method and apparatus for treating water or wastewater, comprising of a plurality of vertically positioned electrodes, which are placed in a treating chamber and wherein the electrodes are interconnected to one another, and wherein the positive and negative electrodes are insulated there-between. The polarity of the direct current supply is changeable at regular intervals in order to prevent passivation of the electrodes when reaching an even abrasion.

US2004/229090 A1 discloses an electrochemical cell comprising: an electrochemical hydrogen generator including: a first cathode which generates hydrogen gas, and a first anode adjacent to the first cathode; and a hydrogen fuel cell including: a second anode which oxidizes hydrogen gas, and a second cathode adjacent to the second anode, wherein the first anode is electrically connected to the second cathode, and the first cathode is electrically connected to the second anode.

US8282812 B2 discloses n apparatus for producing hydrogen from salt water by electrolysis. The apparatus includes a cathode plate and an anode plate spaced apart from the cathode plate. The apparatus also includes a cathode end connector for electrically connecting the cathode plate to a negative terminal of a direct current electrical power supply, and an anode end connector for electrically connecting the anode plate to a positive terminal of the direct current electrical power supply.

In summary, known processes suffer from low efficiencies, high current densities, and lack of efficient scale-up methodologies. Additional treatment and partial desalination of the salt water is also typically required before use in these systems.

As a result, there is a need for improved processes and apparatus for the production of hydrogen gas from salt water, which mitigate or eliminate some of the disadvantages associated with these prior art methods.

Ideally, there is a need for an environmentally-friendly process for the production of hydrogen gas from salt water. A reduction in hazardous by-products would be an advantage, as would a reduction in the rate of decomposition of the electrodes. Increased efficiency, and low energy input requirements would also be advantageous, as would lower capital costs.

### Summary of the Invention

According to claim 1 there is provided an apparatus for the electrochemical production of hydrogen gas from salt water, the apparatus comprising:
a plurality of cathodes;
at least one anode spaced apart from each of the plurality of cathodes by a defined distance;
cathode end connectors for electrically connecting each of the plurality of cathodes to a negative terminal of a direct current electrical power supply;at least one anode end connector for electrically connecting the anode to a positive terminal of a direct current electrical power supply;
wherein the cathode comprises a paramagnetic material and the anode comprises a diamagnetic material; wherein the diamagnetic material is Zn64, Zn66, Zn67, Zn68 or Zn70 and
wherein the distance between the anode and each cathode is equal to the radius of the anode x 3.0 to 3.2.

Advantageously, the inventor has determined that when the materials and configuration of the anode and cathode materials are carefully controlled, the apparatus can be used for the production of hydrogen gas in a highly efficient process. The apparatus requires very low energy input, while still producing a significant amount of hydrogen gas. Decomposition of the electrodes is also reduced.

The anode may be configured to be central to an array of cathodes. In an embodiment, the electrodes may be provided in a tetrahedral configuration. By 'tetrahedral configuration' is meant that each anode is surrounded by a plurality of cathodes which are spaced apart at an equal distance from the anode. For instance, each anode may be surrounded by between 2 to 20 cathodes, or between 4 and 10 cathodes, although this is not particularly limited once the overall anode surface area is roughly equal to the overall cathode surface area. By "roughly equal" it is meant that the surface area of the anodes is within 20%, preferably 15% and more preferably 10% of the surface area of the cathodes.

The distance between the anode and each cathode is equal to the radius of the anode x 3.0 to 3.2, preferably equal to the radius of the anode x π (3.14159).

The distance between the cathodes in the array may be equal to the diameter of the cathode x 3-3.2. Preferably the distance between the cathodes in the array may be equal to the diameter of the cathode x π (3.14159).

Each anode may be in the form of a cylindrical rod.

Each cathode may be in the form of a cylindrical rod.

The distance between the electrodes can be measured by any conventional means, such as a ruler, digital calliper or tape measure.

A paramagnetic material is a material which has a weak attraction to an externally applied magnetic field and which forms an internal induced magnetic field in the direction of the applied magnetic field. The paramagnetic material is not particularly limited once it exhibits these properties, but may be, for instance, 316-904 L stainless steel, 317L stainless steel, 317 LM stainless steel, 317 LMN stainless steel, molybdenum, tungsten, aluminium, scandium, vanadium, manganese, yttrium, zirconium, niobium, rhodium, palladium, lanthanum, hafnium, tantalum, rhenium, osmium, iridium or iron pyrite. In an embodiment, the paramagnetic material may be 316L stainless steel. In an alternative embodiment, the paramagnetic material may be iron pyrite-this can be advantageous due to its natural porous structure, affording it a large surface area for hydrogen production.

A diamagnetic material is a material which is repelled by the application of a magnetic field and forms an induced magnetic field in the direction opposite to the applied magnetic field. The diamagnetic material is Zn64, Zn66, Zn67, Zn68 or Zn70.

The apparatus may comprise an electrode housing. The electrode housing may be formed of any suitable material. Preferably, the housing is formed of a non-conductive/insulating material. In an embodiment, the housing is formed of Pyrex^{™} or glass.

Alternatively, the housing may be formed of a conductive material such as a metal. In this embodiment, the housing can be coated with a non-conductive material such as neoprene, or the outer electrodes (i.e. those in closest proximity to the housing) can be partially coated in neoprene. Alternatively, the electrodes can be configured such that there is a minimum distance equal to the diameter of the electrode by 3-5, preferably a minimum distance equal to the diameter of the electrode by 4-5.5, between the outer electrodes and the housing. In an embodiment, there is a minimum distance equal to the diameter of the electrode by π.

The housing may comprise electrode compartments containing the electrodes.

The apparatus may comprise one or more inlets and outlets.

The one or more inlets may comprise a sea water inlet pipe.

The apparatus may comprise a sea water storage tank. The sea water storage tank may be set above the housing to allow gravity feeding.

The one or more outlets may comprise a hydrogen gas collection unit.

According to claim 9, there is provided a method of producing hydrogen gas from salt water, the method comprising providing an apparatus as previously described, providing direct current to the anode and the at least one cathode, and collecting hydrogen gas produced thereby.

According to claim 10, there is provided a method of treating a diamagnetic material for use in an electrode, the method comprising immersing a diamagnetic material and a paramagnetic material in a sea water environment, wherein the diamagnetic material is Zn64, Zn66, Zn67, Zn68 or Zn70; connecting the diamagnetic material to the negative input of a DC power supply; connecting the paramagnetic material to the positive input of a DC power supply; applying a voltage to the materials; removing the materials from the sea water environment, and allowing the diamagnetic material to oxidise. In an embodiment, the paramagnetic material is molybdenum. The voltage may be applied for a period of time of from 30 minutes to 12 hours. The voltage may be applied for from 1 hour to 5 hours.

The applied voltage may be based on the dimensions of the diamagnetic material used, at from 0.075 to 0.65 V per cm² (~0.5 to 10 volts per square inch) of material, or from 0.15 to 0.75 V per cm² (~ 1 to 5 volts) of material. The treating step can be performed on the apparatus as previously described.

The diamagnetic material may be allowed to oxidise for from 1 hour to 48 hours. In an embodiment, the diamagnetic material may be allowed to oxidise for from 12 hours to 36 hours, or from 15 to 33 hours.

The diamagnetic material may be allowed to oxidise under ambient conditions. The diamagnetic material may be allowed to oxidise at room temperature.

Prior to performing the above method, a further initial pre-treatment step may be performed by immersing the materials in a sea water environment; connecting the diamagnetic material to the positive input; connecting the paramagnetic material to the negative input and applying a voltage to the materials. The voltage can be based on the dimensions of the diamagnetic material used, at from 0.075 to 0.65 V per cm² (~ 0.5 to 10 volts per square inch) of material, or from 0.15 to 0.75 V per cm² (~1 to 5 volts) of material. The voltage may be applied for a period of time of from 30 minutes to 12 hours. The voltage may be applied for from 1 hour to 5 hours. This initial step can remove any materials left over from the manufacturing process and eliminate any contaminations before the pre-treatment is performed. The initial pre-treatment step can be performed on the apparatus as previously described.

Various further features and aspects of the invention are defined in the claims.

### Brief Description of the Drawings

Embodiments of the present invention will now be described by way of example only with reference to the accompanying drawings where like parts are provided with corresponding reference numerals and in which:
Figure 1 provides a schematic of an apparatus according to an embodiment of the invention.
Figure 2 is a schematic illustration of an electrode configuration according to an embodiment of the invention.

### Detailed Description

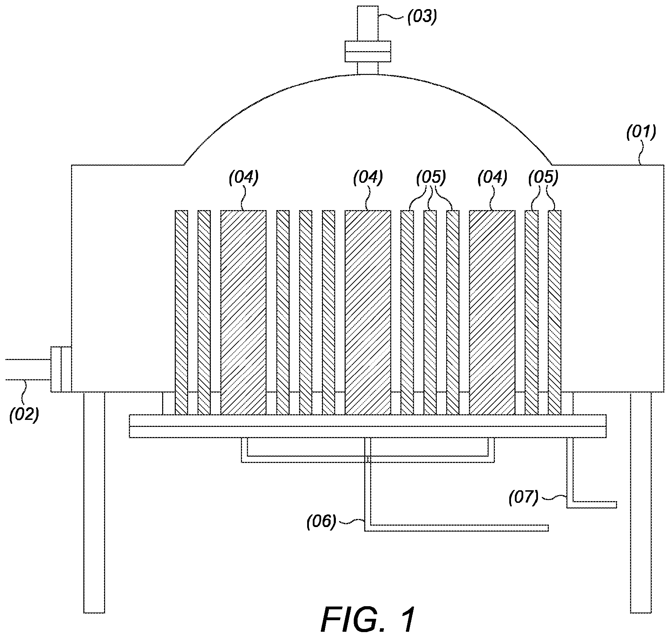

An embodiment of the invention is depicted in Figure 1. Referring to Figure 1, the apparatus comprises a housing (01) which in this embodiment is formed of Pyrex^{™}. The housing comprises a sea water inlet (02) and an outlet (03) for the collection of hydrogen gas and water. The housing comprises two anodes (04), in the form of cylindrical rods of Zn64. Each anode is surrounded by a plurality of stainless steel 316 L cylindrical cathode rods (05) spaced equally apart from the anodes. The anodes and cathodes are connected to a positive DC power input and a negative DC power input, respectively, via positive input (06) and negative input (07).

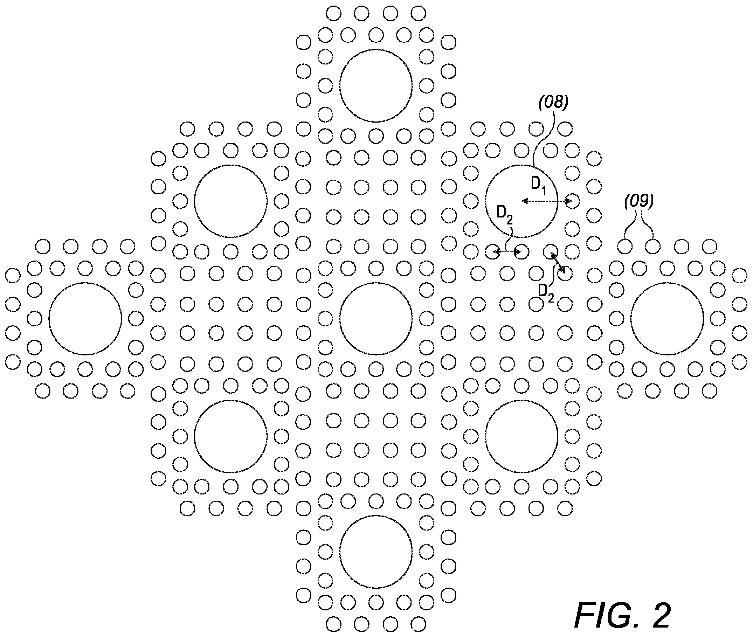

The anodes and cathodes are arranged in a tetrahedral configuration, which is shown schematically in Figure 2. In Figure 2, each anode (08) is surrounded by a plurality of cathodes (09). Each cathode is spaced apart from the anode, and from each other cathode, at a predetermined distance. It is considered that in operation, this configuration means that the whole area is not conductive - simply the area around the rods, leading to a lower amp draw and therefore increased efficiency.

The invention will now be described by reference to the following examples, which are illustrative only, and are not intended to limit the invention which is defined by the appended claims.

### Examples:

### Materials and methodology

Experiments were conducted in a purpose-built system connected to a Hoffman apparatus, and filled with 2 litres of sea water. The system comprised a Pyrex^{™} housing comprising an inlet for the introduction of sea water, and outlet pipe comprising a 100 ml standard syringe with inline tap for the collection of the gaseous reaction products . Voltage and current readings were measured using a Siglent^{™} Oscilloscope (Siglent^{™} SDS 1202 DL). A Sniffer BC gas detector (methane calibrated) was used.

Gas analysis was carried out by an independent ISO 17025 accredited facility, which is UKAS accredited for many analyses. Certified gas mixtures were used (Supplier CK Gases (now Buse gases)), with the exception of Hydrogen, supplied by Air Products (Certified at > 99.95% vol). To this end, sample traces were compared to calibrations, run at the time of the analysis.

### Example 1: Analysis of sea water

Sea water used in the experiments was independently analysed and the results are shown in Table 1 below:

**Table 1: Sea water composition**

| **Analysis** | **Sea Water** |
|---|---|
| Total Dissolved Solids mg/l | 12,100 |
| Total iron µg/l | 49,100 |
| Total magnesium µg/l | <1.0 |
| Alkalinity mg/l | 112 |
| Total molybdate µg/l | 1,210 |
| Total chlorine mg/l | 0.06 |
| Dissolved iron mg/l | 49.6 |
| Chlorides mg/l | 23,600 |
| Conductivity µS/(cm | 52,300 |
| Nitrites mg/l | <10 |
| pH | 7.65 |
| Total Cadmium µg/l | 5.00 |

### Example 2: Initial Testing of Apparatus and Contaminant Removal

2.1
Initial tests were conducted by taking an initial weight measurement of a metallic sample using a scientific scale. The sample was then connected to a S/S 316L cathode in the apparatus and subjected to a positive charge of 3 volts @ 0.64 Amps = 1.92 Watts for a period of 1 hour. The sample was then allowed to dry at atmospheric pressure and temperature for 24 hours, before being re-weighed. The results of this experiment are shown in Table 2.1 below:

**Table 2.1: Initial cleaning and testing with S/S cathode**

| **Material** | **Initial Weight (g)** | **End Weight (g)** | **% difference** |
|---|---|---|---|
| S/S 316L | 5.68 | 5.68 | 0 |
| Molybdenum | 42.22 | 42.12 | 0.99 |
| Tungsten | 3.19 | 3.19 | 0 |
| Aluminium | 4.72 | 4.42 | 0.97 |
| Titanium | 1.19 | 0 (electrode dissolved) | 100 |
| Iron Pyrite | 31.34 | 31.34 | 0.99 |
| Zinc (64) | 14.65 | 14.54 | 0.99 |

2.2
The same methodology as for Example 1.1 was repeated, with samples being connected to a zinc anode (negative charge). The results of this experiment are shown in Table 2.2 below:

**Table 2.2: Initial cleaning and testing with Zn64 anode**

| **Material** | **Initial Weight (g)** | **End Weight (g)** | **% difference** |
|---|---|---|---|
| S/S 316 L | 5.68 | 5.68 | 0 |
| Molybdenum | 42.12 | 42.12 | 0 |
| Tungsten | 3.19 | 3.19 | 0 |
| Aluminium | 4.42 | 4.42 | 0 |
| Titanium | 1.17 | 1.17 | 0 |
| Iron Pyrite | 31.34 | 31.34 | 0 |
| Zinc (64) | 14.54 | 14.54 | 0 |

### Example 3:

The same materials as tested in Example 2 were connected to a paramagnetic anode - in this case stainless steel (S/S 316 L). Samples were subject to a positive charge of 3 Volts @0.64 amps for 1 hour. Resistance was measured throughout the reaction with an analogue probe. The results of this experiment are shown in Table 3.1 below.

**Table 3.1: Paramagnetic anode connection**

| **Material** | **Start (Visual observation)** | **Ohms** | **Finish (Visual observation)** | **Ohms** |
|---|---|---|---|---|
| S/S 316 L | Clear | 5 | Brown | 5 |
| Molybdenum | Clear | 5 | Brown | 5 |
| Tungsten | Clear | 5 | Brown | 5 |
| Aluminium | Clear | 5 | Brown | 5 |
| Titanium | Clear | 5 | Brown | 5 |
| Iron pyrite | Clear | 5 | Brown | 5 |
| Zinc (64) | Clear | 5 | Brown | 5 |

Visual observation of the output liquid showed a brown colour, indicating the generation of Cl₂.

The testing was repeated with connection to a diamagnetic anode, Zn64. The results of this testing are shown in Table 3.2 below.

**Table 3.2: Diamagnetic anode connection**

| **Material** | **Start (Visual observation)** | **Ohms** | **Finish (Visual observation)** | **Ohms** |
|---|---|---|---|---|
| S/S 316 L | Clear | 5 | Clear | 5 |
| Molybdenum | Clear | 5 | Clear | 5 |
| Tungsten | Clear | 5 | Clear | 5 |
| Aluminium | Clear | 5 | Clear | 5 |
| Titanium | Clear | 5 | Clear | 5 |
| Iron pyrite | Clear | 5 | Clear | 5 |

Visual observation of the liquid removed after completion of the experiment showed a clear colour, suggesting that no chlorine was evolved.

### Example 4: Hydrogen production

The 100 ml syringe was pre-weighed, and then attached to the apparatus set up with a S/S 316 L cathode and Zn64 anode. A voltage of 3v @0.64 amp was applied, and the gas produced collected in the syringe. The syringe was re-weighed. The results showed that the syringe at the end of the reaction weighed 50.33 g, versus 50.425 at the start of the reaction, suggesting the presence of hydrogen gas.

Gas was produced at a rate of 4.6 ml/min (276 ml/hr).

The gas evolved was collected in a test tube over the output of the Hoffman apparatus and ignited with wooden splints. The gas gave a popping sound when ignited, again indicating the presence of hydrogen gas. Further gas detection was carried out with a sniffer and cross-checked against a density chart. Again, the presence of hydrogen gas was confirmed.

A syringe of the gas produced was sent for independent GC-TCD testing, under the following conditions:°°

**Table 4.1: GC-TCD conditions**

| | |
|---|---|
| Column | Carboxen 1010, 30 m x 0.32 mm |
| Injector | Split/splitless, 150°C |
| Carrier gas | Helium, 1.8 ml/min, 0.7: 1 split |
| Column Temperature Program | 80°C for 12 mins/25°C/min to 240°C held for 3 mins |
| Detector (TCD) Temperature | 150°C |

The results indicated that the composition of the gas was as follows:

**Table 4.2: Composition of gas**

| Hydrogen | Nitrogen^{∗} | Carbon dioxide |
|---|---|---|
| 44.28% | 54.49% | 1.22% |

| | | |
|---|---|---|
| ^{∗}The lab has indicated a possible minor error in the abundance of nitrogen due to saturation of the detector by the nitrogen contained in the sample. | | |

### Example 5: Effect of electrode distance

The effect of the distance between an anode positioned central to an array of cathodes on the amps drawn by the apparatus was investigated. A schematic of the array system is shown in Figure 2. The distance, **D,** is measured from the centre of the anode to the centre of the cathode. The flow rate was 4.6 ml/min.

**Table 5.1: Effect of distance on amps drawn**

| Distance, **D** (mm) | Radius of anode (mm) | Voltage in (V) | Watts | Ohms at start/finish | Amps | Temp range (°C) (over 1 hr) | Distance ratio (radius a node:X) |
|---|---|---|---|---|---|---|---|
| 10 | 5 | 3 | 4.92 | 5/5 | 1.64 | 0-11.3 | 2 |
| 15.7 | 5 | 3 | 1.92 | 5/5 | 0.64 | 0-8.4 | 3.14 |
| 20 | 5 | 3 | 1.92 | 5/5 | 0.64 | 0-8.4 | 4 |
| 30 | 5 | 3 | 1.92 | 5/5 | 0.64 | 0-8.4 | 6 |
| 50 | 5 | 3 | 1.92 | 5/5 | 0.64 | 0-8.4 | 10 |

These results demonstrate that when the distance between the anode and the arrayed cathodes is controlled between approximately 3 and 3.2 times the radius of the anode, the amps drawn remains stable and low. This indicates that the overall design of the electrode array plays a key role in maintaining a stable and efficient method for producing hydrogen gas from sea water while mitigating some of the problems associated with standard plate configurations for electrolysis.

While temperatures increased slightly over time, the temperature can be controlled by the simple flow design structure of the housing.

### Example 6:

The experiment of example 4 was reproduced with a DC power input of 10v @ 9 amp, and gas collection in a 1L cylinder. A filtration step was added after gas collection, and the gas was forced through a three-stage filter composed of 12 inches/30.48 cm each of 1) polymer filter (polymer beads pre-soaked in water); 2) carbon filter and 3) zeolite filter (38 inches/91.44 cm of filter in total). The three stage filtration serves to 1) absorb salt residue from the reaction process; 2) absorb the carbon monoxide/carbon dioxide and 3) absorb any remaining moisture. The gas was then compressed to 3 bar, before being sent for independent analysis. The results of the analysis are shown in Table 6.1 below:

**Table 6.1 - composition of evolved gas**

| **Test** | **Method** | **Units** | **Results** |
|---|---|---|---|
| Hydrogen content | ASTM D2504 mod^{∗} | % v/v | 38.3 |
| Carbon monoxide content | ASTM D2504 mod^{∗} | ppm v/v | < 20 |
| Carbon dioxide content | ASTM D2504 mod^{∗} | ppm v/v | 213 |
| Oxygen content | ASTM D2504 mod^{∗} | % v/v | Greater than 10 |
| Nitrogen content | ASTM D2504 mod^{∗} | % v/v | Greater than 30 |
| | | | |
| Methane | IP 405 mod^{∗} | % v/v | Less than 0.0005 |
| C2-C6 Hydrocarbons | IP 405 mod^{∗} | % v/v | Less than 0.01 |

ASTM D2504: Standard Test Method for Non Condensable Gases in C₂ and Lighter Hydrocarbon products by Gas Chromatography. mod^{∗} indicates that modifications to the standard method were made, as detailed below:

### Section 9.2 - Calibration

Prepare at least 3 synthetic standard samples containing the compounds to be determined over the range of concentration desired in the products to be analysed, using pure gases or certified blend. *mod: two or one point calibrations were used depending on the individual component concentrations in the sample.

### Section 10.1 - Procedure

Connect the sample cylinder containing a gaseous sample to the gas sample valve with a metal tube and allow the sample to flow for about ½ min. at a rate of 70 to 100 mls/min. *mod: the flow rate is not measured but is run according to experience with this particular GC configuration, and the repeatability of successive runs. This will vary from system to system.

### Section 12 - Precision and Bias

Data relating to repeatability and reproducibility. *mod: There is no precision data for this particular application.

IP 405. Commercial Propane and Butane - analysis by GC mod* indicates that modifications to the standard method were made, as detailed below:

### Section 3 - Principle

Physical separation by Gas Chromatography. Identification of components by passing a standard reference mixture or pure hydrocarbons through the column, or by comparison with relative retention volumes of typical chromatograms. Calculation of concentrations of components by measuring peak areas and applying correction factors. Method excludes levels below 0.1%. *mod: All standard methodology applies except gas standards were used to calculate concentrations by relative areas, and the reporting limit reduced on discovery that the samples contained little or no hydrocarbons. ppm gas standards were used and a signal to noise ratio of 3:1 used to calculate the reporting limits.

### Section 5.2 - Materials

Pure gases or a mixture of gases with certified compositions. *mod: used as stated above.

### Section 6 - Apparatus

### 6.3 Column

The types of column described in this clause have been found suitable and are recommended. Other columns may be used provided that the resolution performance quoted in 6.3.3 is achieved and provided that the relative retention of other hydrocarbons are well known. *mod: The standard method allows for 'other' columns so long as they match resolution and correct identification by retention times. Capillary columns have now exceeded, in the main, packed column performances, as is the case in this analysis.

### 6.3.3 Resolution

R_{ab} must be > 1.5 where R_{ab} is the resolution between peaks A and B where A and B are either propane and propene, or propene and isobutane. *mod: The resolution R_{ab} set at > 1.5 is easily exceeded by the column used where C3 elutes at 3.28", propene at 5.70" and isobutane at 8.11".

### Section 8 - Quantitation

### 8.2.2.2. Flame ionisation detector

Peak area corrections factors are only employed if standard blends are not used according to a formula based on carbon atoms, hydrogen atoms and a mass factor for the component.
*mod: peak area correction factors are not used, but certified standards are.

### Section 10 - Precision

Data relating to repeatability and reproducibility. *mod: There is no precision data for this particular application.

### Example 7:

The experiment of example 6 was reproduced with the exception that the filter length was increased to 12 inches/30.48 cm of polymer, 24 inches/60.96 cm of zeolite and 24 inches/60.96 cm of carbon (i.e. 60 inches/152.4 cm of filter in total). The results are shown in Table 7.1 below:

**Table 7.1: composition of evolved gas**

| **Test** | **Method** | **Units** | **Results** |
|---|---|---|---|
| Hydrogen content | ASTM D2504 mod^{∗} | % v/v | 29.86 |
| Carbon monoxide content | ASTM D2504 mod^{∗} | ppm v/v | 0.0082 |
| Carbon dioxide content | ASTM D2504 mod^{∗} | ppm v/v | 0.0255 |
| Oxygen content | ASTM D2504 mod^{∗} | % v/v | 14.10 |
| Nitrogen content | ASTM D2504 mod^{∗} | % v/v | 56.00 |

All of the features disclosed in this specification (including any accompanying claims, abstract and drawings), and/or all of the steps of any method or process so disclosed, may be combined in any combination, except combinations where at least some of such features and/or steps are mutually exclusive.

It will be understood by those within the art that, in general, terms used herein, and especially in the appended claims are generally intended as "open" terms (e.g., the term "including" should be interpreted as "including but not limited to," the term "having" should be interpreted as "having at least," the term "includes" should be interpreted as "includes but is not limited to," etc.). It will be further understood by those within the art that if a specific number of an introduced claim recitation is intended, such an intent will be explicitly recited in the claim, and in the absence of such recitation no such intent is present. For example, as an aid to understanding, the following appended claims may contain usage of the introductory phrases "at least one" and "one or more" to introduce claim recitations.

Accordingly, the various embodiments disclosed herein are not intended to be limiting, with the true scope being indicated by the following claims.

## Claims

1. An apparatus for the electrochemical production of hydrogen gas from salt water, the apparatus comprising:
a plurality of cathodes;
at least one anode spaced apart from the plurality of cathodes by a defined distance;
cathode end connectors for electrically connecting each cathode to a negative terminal of a direct current electrical power supply;
an anode end connector for electrically connecting the anode to a positive terminal of a direct current electrical power supply;
wherein each cathode comprises a paramagnetic material and the at least one anode comprises a diamagnetic material; wherein the diamagnetic material is Zn64, Zn66, Zn67, Zn68 or Zn70; and wherein the distance between the anode and each cathode is equal to the radius of the anode x 3 to 3.2.

2. An apparatus as claimed in claim 1, wherein the anode is configured to be central to an array of cathodes.

3. An apparatus as claimed in claim 1 or claim 2, wherein the cathodes are spaced apart at equal distances from the anode.

4. An apparatus as claimed in claim 2 or claim 3, wherein the distance between each cathode in the array is equal to the diameter of the cathode x 3.0 to 3.2.

5. An apparatus as claimed in any preceding claim, wherein the at least one anode and the plurality of cathodes are provided in a tetrahedral configuration.

6. An apparatus as claimed in any preceding claim, wherein the distance between the anode and each cathode is equal to the radius of the anode x 3.1 to 3.2.

7. An apparatus as claimed in claim 2, wherein the distance between the cathodes in the array is equal to the diameter of the cathode x 3.1 to 3.2.

8. An apparatus as claimed in any preceding claim, wherein the paramagnetic material is selected from 316-904 L stainless steel, 317 L stainless steel, 317 LM stainless steel, 317 LMN stainless steel, molybdenum, tungsten, aluminium, , scandium, vanadium, manganese, yttrium, zirconium, niobium, rhodium, palladium, lanthanum, hafnium, tantalum, rhenium, osmium, iridium and iron pyrite, preferably wherein the paramagnetic material is 316 L stainless steel.

9. A method of producing hydrogen gas from salt water, the method comprising providing an apparatus as in any of claims 1 to 8, providing direct current to the at least one anode and the at least one cathode, and collecting hydrogen gas produced thereby.

10. A method of treating a diamagnetic material for use in an electrode, the method comprising:
immersing a diamagnetic material and a paramagnetic material in a sea water environment;
wherein the diamagnetic material is Zn64, Zn66, Zn67 Zn68 or Zn70;
connecting the diamagnetic material to the negative input of a DC power supply;
connecting the paramagnetic material to the positive input of a DC power supply;
applying a voltage to the materials;
removing the materials from the sea water environment; and
allowing the diamagnetic material to oxidise.

11. A method of treating a diamagnetic material as claimed in claim 10, wherein the paramagnetic material is molybdenum.

## Patentansprüche

1. Einrichtung zur elektrochemischen Erzeugung von Wasserstoffgas aus Salzwasser, wobei die Einrichtung Folgendes umfasst:
eine Vielzahl von Kathoden;
mindestens eine Anode, die von der Vielzahl von Kathoden um einen definierten Abstand beabstandet ist;
Kathodenendverbinder zum elektrischen Verbinden jeder Kathode mit einem negativen Anschluss einer Gleichstromversorgung;
einen Anodenendverbinder zum elektrischen Verbinden der Anode mit einem positiven Anschluss einer elektrischen Gleichstromversorgung;
wobei jede Kathode ein paramagnetisches Material umfasst und die mindestens eine Anode ein diamagnetisches Material umfasst; wobei das diamagnetische Material Zn64, Zn66, Zn67, Zn68 oder Zn70 ist; und wobei der Abstand zwischen der Anode und jeder Kathode gleich dem Radius der Anode x 3 bis 3,2 ist.

2. Einrichtung nach Anspruch 1, wobei die Anode konfiguriert ist, um zentral zu einer Kathodenanordnung zu liegen.

3. Einrichtung nach Anspruch 1 oder Anspruch 2, wobei die Kathoden in gleichen Abständen von der Anode angeordnet sind.

4. Einrichtung nach Anspruch 2 oder Anspruch 3, wobei der Abstand zwischen jeder Kathode in der Anordnung gleich dem Durchmesser der Kathode x 3,0 bis 3,2 ist.

5. Einrichtung nach einem der vorstehenden Ansprüche, wobei die mindestens eine Anode und die Vielzahl von Kathoden in einer tetraedrischen Konfiguration bereitgestellt sind.

6. Einrichtung nach einem der vorstehenden Ansprüche, wobei der Abstand zwischen der Anode und jeder Kathode gleich dem Radius der Anode x 3,1 bis 3,2 ist.

7. Einrichtung nach Anspruch 2, wobei der Abstand zwischen den Kathoden in der Anordnung gleich dem Durchmesser der Kathode x 3,1 bis 3,2 ist.

8. Einrichtung nach einem der vorstehenden Ansprüche, wobei das paramagnetische Material aus Edelstahl 316-904 L, Edelstahl 317 L, Edelstahl 317 LM, Edelstahl 317 LMN, Molybdän, Wolfram, Aluminium, Scandium, Vanadium und Mangan, Yttrium, Zirkonium, Niob, Rhodium, Palladium, Lanthan, Hafnium, Tantal, Rhenium, Osmium, Iridium und Eisenpyrit ausgewählt ist, wobei das paramagnetische Material vorzugsweise Edelstahl 316 List.

9. Verfahren zum Herstellen von Wasserstoffgas aus Salzwasser, wobei das Verfahren das Bereitstellen einer Einrichtung nach einem der Ansprüche 1 bis 8, das Bereitstellen von Gleichstrom für die mindestens eine Anode und die mindestens eine Kathode und das Sammeln des dadurch hergestellten Wasserstoffgases umfasst.

10. Verfahren zur Behandlung eines diamagnetischen Materials zur Verwendung in einer Elektrode, wobei das Verfahren Folgendes umfasst:
Eintauchen eines diamagnetischen Materials und eines paramagnetischen Materials in eine Meerwasserumgebung; wobei das diamagnetische Material Zn64, Zn66, Zn67, Zn68 oder Zn70 ist;
Verbinden des diamagnetischen Materials mit dem negativen Eingang einer DC-Stromversorgung;
Verbinden des paramagnetischen Materials mit dem positiven Eingang einer DC-Stromversorgung;
Anlegen einer Spannung an die Materialien;
Entfernen der Materialien aus der Meerwasserumgebung; und
Oxidierenlassen des diamagnetischen Materials.

11. Verfahren zur Behandlung eines diamagnetischen Materials nach Anspruch 10, wobei das paramagnetische Material Molybdän ist.

## Revendications

1. Appareil pour la production électrochimique d'hydrogène gazeux à partir d'eau salée, l'appareil comprenant :
une pluralité de cathodes ;
au moins une anode espacée de la pluralité de cathodes d'une distance définie ;
des connecteurs d'extrémité de cathode pour raccorder électriquement chaque cathode à une borne négative d'une alimentation électrique en courant continu ;
un connecteur d'extrémité d'anode pour raccorder électriquement l'anode à une borne positive d'une alimentation électrique en courant continu ;
dans lequel chaque cathode comprend un matériau paramagnétique et la au moins une anode comprend un matériau diamagnétique ;
dans lequel le matériau diamagnétique est Zn64, Zn66, Zn67, Zn68 or Zn70 ;
et dans lequel la distance entre l'anode et chaque cathode est égale au rayon de l'anode x 3 à 3,2.

2. Appareil tel que revendiqué dans la revendication 1, dans lequel l'anode est configurée pour être centrale à un réseau de cathodes.

3. Appareil tel que revendiqué dans la revendication 1 ou la revendication 2, dans lequel les cathodes sont espacées à égales distances de l'anode.

4. Appareil tel que revendiqué dans la revendication 2 ou la revendication 3, dans lequel la distance entre chaque cathode dans le réseau est égale au diamètre de la cathode x 3,0 à 3,2.

5. Appareil tel que revendiqué dans une quelconque revendication précédente, dans lequel la au moins une anode et la pluralité de cathodes sont disposées dans une configuration tétrahédrique.

6. Appareil tel que revendiqué dans une quelconque revendication précédente, dans lequel la distance entre l'anode et chaque cathode est égale au rayon de l'anode x 3,1 à 3,2.

7. Appareil tel que revendiqué dans la revendication 2, dans lequel la distance entre les cathodes dans le réseau est égale au diamètre de la cathode x 3,1 à 3,2.

8. Appareil tel que revendiqué dans une quelconque revendication précédente, dans lequel le matériau paramagnétique est sélectionné parmi l'acier inoxydable 316-904 L, l'acier inoxydable 317 L, l'acier inoxydable 317 LM, l'acier inoxydable 317 LMN, le molybdène, le tungstène, l'aluminium, le scandium, le vanadium, le manganèse, l'yttrium, le zirconium, le niobium, le rhodium, le palladium, le lanthane, le hafnium, le tantale, le rhénium, l'osmium, l'iridium et pyrite de fer, de préférence dans lequel le matériau paramagnétique est l'acier inoxydable 316 L.

9. Procédé de production d'hydrogène gazeux à partir d'eau salée, le procédé comprenant la fourniture d'un appareil tel que dans l'une quelconque des revendications 1 à 8, la fourniture d'un courant continu à la au moins une anode et à la au moins une cathode et la collecte de l'hydrogène gazeux produit au moyen de celui-ci.

10. Procédé de traitement d'un matériau diamagnétique destiné à être utilisé dans une électrode, le procédé comprenant :
l'immersion d'un matériau diamagnétique et d'un matériau paramagnétique dans un environnement d'eau salée ; dans lequel le matériau diamagnétique est Zn64, Zn66, Zn67, Zn68 ou Zn70 ;
le raccordement du matériau diamagnétique à l'entrée négative d'une alimentation électrique en CC ;
le raccordement du matériau paramagnétique à l'entrée positive d'une alimentation électrique en CC ;
l'application d'une tension aux matériaux ;
le retrait des matériaux de l'environnement d'eau salée ; et
le fait de permettre au matériau diamagnétique de s'oxyder.

11. Procédé de traitement d'un matériau diamagnétique tel que revendiqué dans la revendication 10, dans lequel le matériau paramagnétique est le molybdène.
